# EUROPÄISCHE PATENTSCHRIFT

(11) **EP 0 491 135 B1**
(45) Veröffentlichungstag und Bekanntmachung des Hinweises auf die Patenterteilung: **02.02.1994**
(21) Anmeldenummer: 91117956.2
(22) Anmeldetag: 22.10.1991
(51) Int. Cl.: A23C 7/04, B04B 1/10

(54) **Selbstentleerende Schleudertrommel zur zentrifugalen Entkeimung von Milch**
Self draining drum for centrifugal sterilization of milk
Tambour rotatif auto-drainant pour la stérilisation du lait

(30) Priorität: 17.12.1990 DE 4040294
(43) Veröffentlichungstag der Anmeldung: 24.06.1992
(73) Patentinhaber: Westfalia Separator AG, 59302 Oelde (DE)
(72) Erfinder: Zettier, Karl-Heinz, W-4740 Oelde (DE); Lehmann, Hanno, Dipl.-Ing., W-4740 Oelde (DE); Siegfried Klapper, 4836 Herzebrock-Clarholz (DE)

(56) Entgegenhaltungen:
- EP-A- 0 123 491
- EP-A- 0 148 598
- DE-A- 2 701 624
- DE-A- 3 620 548
- DE-B- 2 913 406
- DE-C- 3 826 461
- US-A- 3 217 982

## Beschreibung

Die Erfindung bezieht sich auf eine selbstentleerende Schleudertrommel zur zentrifugalen Entkeimung von Milch mit einem Zulauf für die Zuführung der Milch in einen Einlaufraum der Schleudertrommel, mit einer ersten Schälkammer, in der ein erstes Schälorgan für die Ableitung der entkeimten Milch vorgesehen ist, und mit einem Tellereinsatz, der einen Konzentratraum radial einwärts begrenzt, von dem mit Drosselkanälen versehene Kanäle sowie Austragsöffnungen für den periodischen Konzentrataustrag ausgehen, wobei die Drosselkanäle in eine zweite Schälkammer münden, in der ein zweites Schälorgan vorgesehen ist mit einem Ableitkanal für die über die Drosselkanäle abgezogene keimarme Flüssigkeit.

Eine derartige Schleudertrommel ist bekannt aus der DE 38 02 305 C1. Der Ableitkanal des zweiten Schälorganes steht bei dieser Schleudertrommel mit einer Ablaufleitung in Verbindung, die ihrerseits wieder in den Zulauf der Schleudertrommel mündet. Die Ablaufleitung bedingt zusammen mit den erforderlichen Verbindungselementen einen nicht unerheblichen Herstellungsaufwand. Außerdem werden auch die Demontage- und Montagearbeiten aufwendiger.

Der Erfindung liegt die Aufgabe zugrunde, die bekannte Schleudertrommel so auszubilden, daß der Herstellungs- und Montageaufwand verringert wird.

Diese Aufgabe wird dadurch gelöst, daß der Ableitkanal des zweiten Schälorganes unmittelbar in den Einlaufraum der Schleudertrommel mündet.

Für das Rückführen der keimarmen Flüssigkeit sind keinerlei zusätzliche Armaturen wie Rohre, Verschraubungen oder Dichtungen erforderlich. Dadurch wird nicht nur der Herstellungsaufwand geringer, sondern es vereinfacht sich auch der Montageaufwand. Außerdem können auch keine Leckagen auftreten, wie es bei verschraubten Rohrleitungsteilen der Fall sein kann.

In einer vorteilhaften Ausgestaltung ist die zweite Schälkammer unterhalb der ersten Schälkammer angeordnet. Ein Tangieren der Ableitkanäle wird hierdurch vermieden, weil die Ableitkanäle jeweils zu der dem benachbarten Schälorgan entgegengesetzten Richtung führen. Diese Anordnung führt daher zu einer besonders einfachen Konstruktion.

In einer weiteren vorteilhaften Ausgestaltung ist jedem Drosselkanal ein Drosselkörper zugeordnet, der die Einstellung der gewünschten Menge keimarmer Flüssigkeit ermöglicht, die rezirkuliert werden soll.

Weitere vorteilhafte Ausgestaltungen sind in den restlichen Unteransprüchen angegeben.

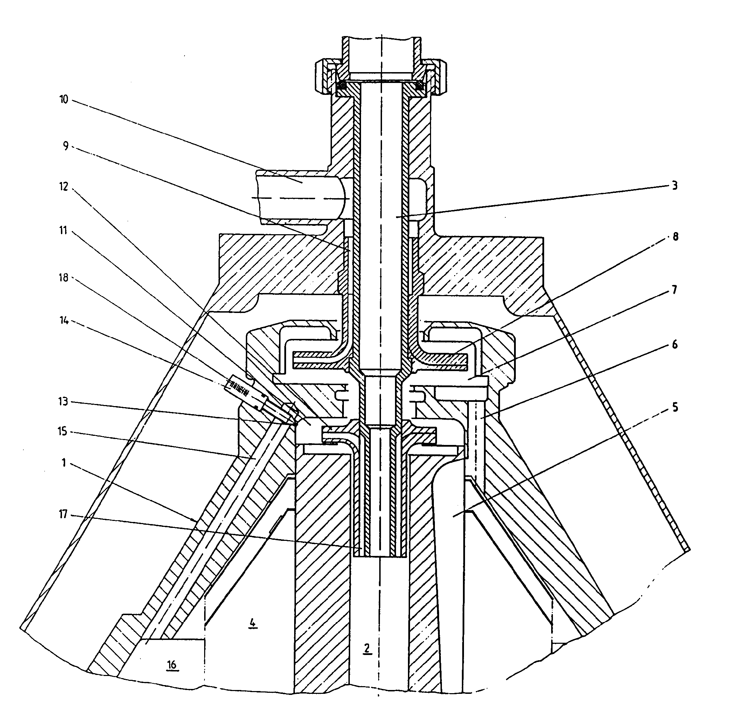

Ein Ausführungsbeispiel der Erfindung ist in der Zeichnung dargestellt und wird nachstehend näher erläutert.

Mit 1 ist in der Zeichnung die Schleudertrommel bezeichnet, deren Einlaufraum 2 mit einem Zulauf 3 in Verbindung steht. In der Schleudertrommel 1 ist ein Tellereinsatz 4 vorgesehen, dessen zentraler Bereich über Kanäle 5, 6 mit einer ersten Schälkammer 7 verbunden ist, in der ein erstes Schälorgan 8 vorgesehen ist, dessen Ableitkanäle 9 zu einem Ablauf 10 führen. Eine zweite Schälkammer 11 mit einem darin angeordneten zweiten Schälorgan 12 hat über Drosselkanäle 13 mit Drosselkörpern 14 und Kanäle 15 Verbindung mit einem durch den Tellereinsatz 4 radial einwärts begrenzten Konzentratraum 16. Von dem zweiten Schälorgan 12 führt ein Ableitkanal 17, der den Zulauf 3 konzentrisch umgibt, in den Einlaufraum 2.

Die zu entkeimende Milch wird der Schleudertrommel 1 über den Zulauf 3 zugeführt und gelangt über den Einlaufraum 2 in den Tellereinsatz 4, in dem sich die Keime von der Milch trennen, die dann zum Konzentratraum 16 wandern. Die entkeimte Milch gelangt über die Kanäle 5, 6 in die erste Schälkammer 7 und über das erste Schälorgan 8 und die Ableitkanäle 9 in den Ablauf 10.

Über die Kanäle 15 und die Drosselkanale 13 wird ständig ein Teilstrom keimarmer Flüssigkeit aus dem Konzentratraum 16 der Schleudertrommel herausgeleitet und über das zweite Schälorgan 12 und den Ableitkanal 17 zurück in den Einlaufraum 2 der Schleudertrommel 1 geführt. Durch die von der Außenseite der Schleudertrommel zugänglichen Drosselkörper 14 kann die Menge der zirkulierenden keimarmen Flüssigkeit bei Stillstand der Schleudertrommel verändert werden, ohne die Schleudertrommel demontieren zu müssen. Die Einstellung wird erleichtert durch Markierungen 18 auf den Drosselkörpern 14.

Die sich an der Trommelperipherie ansammelnden Keime werden über nicht dargestellte Austragsöffnungen von Zeit zu Zeit ausgetragen.

Die Anordnung der ersten Schälkammer 7 oberhalb der zweiten Schälkammer 11 führt bei schwerkraftabhängigen Flüssigkeitsfilmen von der ersten in die zweite Schälkammer zu keiner Beeinflussung der bereits entkeimten Milch, wie dies bei einer umgekehrten Anordnung leicht möglich wäre.

## Patentansprüche

1. Selbstentleerende Schleudertrommel zur zentrifugalen Entkeimung von Milch mit einem Zulauf für die Zuführung der Milch in einen Einlaufraum der Schleudertrommel, mit einer ersten Schälkammer, in der ein erstes Schälorgan für die Ableitung der entkeimten Milch vorgesehen ist, und mit einem Tellereinsatz, der einen Konzentratraum radial einwärts begrenzt, von dem mit Drosselkanälen versehene Kanäle sowie Austragsöffnungen für den periodischen Konzentrataustrag ausgehen, wobei die Drosselkanäle in eine zweite Schälkammer münden, in der ein zweites Schälorgan vorgesehen ist mit einem Ableitkanal für die über die Drosselkanäle abgezogene keimarme Flüssigkeit, **dadurch gekennzeichnet**, daß der Ableitkanal (17) des zweiten Schälorganes (12) unmittelbar in den Einlaufraum (2) der Schleudertrommel (1) mündet.

2. Schleudertrommel nach Anspruch 1, dadurch gekennzeichnet, daß die zweite Schälkammer (11) unterhalb der ersten Schälkammer (7) angeordnet ist.

3. Schleudertrommel nach Anspruch 1 oder 2, dadurch gekennzeichnet, daß jedem Drosselkanal (13) ein verstellbarer Drosselkörper (14) zugeordnet ist.

4. Schleudertrommel nach Anspruch 3, dadurch gekennzeichnet, daß der Drosselkörper (14) von der Außenseite der Schleudertrommel (1) verstellbar ist.

5. Schleudertrommel nach Anspruch 2 oder 3, dadurch gekennzeichnet, daß der Drosselkörper (14) mit Markierungen (18) versehen ist, an denen die Drosselstellung ablesbar ist.

## Claims

1. Self-cleaning centrifuge bowl for the centrifugal bacterial clarification of milk with an inlet for feeding the milk into an inlet chamber of the centrifuge bowl, with a first paring chamber which is provided with a first paring element for discharging the bacterially clarified milk, and with a disk stack which radially limits a concentrate space inwards, from which lead off channels provided with throttle channels as well as discharge ports for the periodic discharge of concentrate, whereby the throttle channels open up into a second paring chamber in which a second paring element is located with a discharge channel for the low-germ liquid drawn off via the throttle channels, **characterised in that** the discharge channel (17) of the second paring element (12) opens up directly into the inlet chamber (2) of the centrifuge bowl (1).

2. Centrifuge bowl in accordance with claim 1, characterised in that the second paring chamber (11) is arranged beneath the first paring chamber (7).

3. Centrifuge bowl in accordance with claim 1 or 2, characterised in that each throttle channel (13) is provided with an adjustable flow restrictor (14).

4. Centrifuge bowl in accordance with claim 3, characterised in that the flow restrictor (14) is adjustable from the exterior of the centrifuge bowl (1).

5. Centrifuge bowl in accordance with claim 2 or 3, characterised in that the flow restrictor (14) is provided with marks (18) from which the throttle position can be read off.

## Revendications

1. Bol auto-débourbeur pour la dégermination du lait par voie centrifuge possédant une alimentation envoyant le lait dans une chambre d'alimentation du bol centrifuge, une première chambre de refoulement, où est prévu un premier organe de prélèvement pour le refoulement du lait dégerminé, et une pile d'assiettes limitant radialement vers l'intérieur une chambre à concentrat d'où sortent des canaux pourvus de canaux d'étranglement ainsi que des orifices de sortie pour l'évacuation périodique du concentrat, les canaux d'étranglement débouchant dans une seconde chambre de refoulement dans laquelle se trouve un second organe de prélèvement pourvu d'un canal d'évacuation pour le liquide pauvre en germes soutiré via les canaux d'étranglement, **caractérisé en ce que** le canal d'évacuation (17) du second organe de prélèvement (12) débouche directement dans la chambre d'alimentation (2) du bol centrifuge (1).

2. Bol centrifuge selon la revendication 1, caractérisé en ce que la seconde chambre de refoulement (11) est aménagée en-dessous de la première chambre de refoulement (7).

3. Bol centrifuge selon la revendication 1 ou 2, caractérisé en ce que chaque canal d'étranglement (13) est adjoint à un organe d'étranglement réglable (14).

4. Bol centrifuge selon la revendication 3, caractérisé en ce que le réglage de l'organe d'étranglement (14) se fait à partir de la paroi extérieure du bol centrifuge (1).

5. Bol centrifuge selon la revendication 2 ou 3, caractérisé en ce que l'organe d'étranglement (14) est pourvu de repères (18) permettant la lecture de la position d'étranglement.
